# EUROPEAN PATENT SPECIFICATION

(11) **EP 3 575 985 B1**
(45) Date of publication and mention of the grant of the patent: **25.11.2020**
(21) Application number: 19184468.7
(22) Date of filing: 22.07.2013
(51) Int. Cl.: G06F 17/00, F03D 13/00, F03D 1/00

(54) **METHOD FOR DETERMINING THE LIFE OF COMPONENTS OF A WIND TURBINE OR SIMILAR ACCORDING TO ITS LOCATION**
VERFAHREN ZUR BESTIMMUNG DER LEBENSDAUER VON KOMPONENTEN EINER WINDTURBINE ODER DERGLEICHEN GEMÄSS IHRES STANDORTS
PROCÉDÉ DESTINÉ À DÉTERMINER LA VIE DES COMPOSANTS D'UN AÉROGÉNÉRATEUR OU ANALOGUE EN FONCTION DE LEUR EMPLACEMENT

(43) Date of publication of application: 04.12.2019
(62) Divisional of application: 13890056.8
(73) Proprietor: Nabla Wind Power, S.L., 01013 Vitoria (ES)
(72) Inventor: FERNÁNDEZ DE VELASCO MUNOZ, César Jesús, E-48008 Bilbao (Vizcaya) (ES)
(74) Representative: Evens, Paul Jonathan

(56) References cited:
- EP-A1- 2 325 480
- WO-A2-2011/143531
- US-A1- 2009 180 875
- US-A1- 2010 138 267
- US-A1- 2010 298 995

## Description

### Field of the Art

The present invention relates to the determination of the life of the different components forming a wind turbine, proposing a method which allows determining the life of each component of the wind turbine taking into account the specific wind conditions at the location at which the wind turbine is arranged, and the specific operating conditions of the wind turbine at said location. The invention can also be applied to water turbines, underwater turbines, or the like, in which rather than the wind striking the wind turbine is considered the fluid striking the water turbine, i.e., the water currents at the location.

### State of the Art

In the last decade there has been an increase in the installed wind power capacity, because the obvious environmental advantages provided by wind energy caused governments and private initiatives to fund the construction of new wind farms. These favorable financial conditions, together with the increase in energy demand, caused technology to mature and the number of installed wind turbines to multiply.

However, in recent years the lack of economic and commercial activity has caused a drop in the energy demand, reducing the need to install greater capacity; on the other hand, the worldwide financial recession radically reduced wind energy subsidies, which brought the construction of new wind farms to a halt. All this has caused wind energy investors to focus their efforts on maintaining safety in those wind farms that are already installed, in the attempt to improve cost-effectiveness of the investments that are already in place, so it has been decided that the time during which wind turbines on wind farms are in service is to be extended.

Wind turbines are designed based on regulatory standard wind classes, according to regulations such as IEC 61400 (International Electrotechnical Commission), or GL Germanischer Lloyd, or DIBt. Therefore, when designing wind turbines, they are not designed in a manner specific to each location, but rather are designed in accordance with those generic wind class conditions, and then the wind turbines with the design wind classes which best cover the wind conditions at the location are chosen for each location.

These regulatory wind classes are usually very conservative in connection with actual wind conditions at the location where wind turbines are arranged. By law, wind turbines are designed to last for 20 years during which time they must perform in accordance with the technical specifications for which they were designed, without the occurrence of significant malfunctions.

As a result, said 20-year design life of wind turbines can vary from one location to the next and as a general rule can be extended, i.e., the actual life of the wind turbine normally exceeds the life for which it was designed. That is because actual wind conditions at the location are usually milder than those indicated by law, so the loads to which the wind turbine is actually subjected are usually of a lower magnitude than the loads for which it was designed.

Patent document WO2012/160370 discloses a method for determining in an approximate manner the remaining life of the drive train of a wind turbine, wherein the loads to which the wind turbine drive train shaft is subjected are determined by means of computer simulation tools, and wherein only regulatory standard wind classes are taken into account for calculating said loads. In addition, patent document WO2012/107051 discloses a method for determining the remaining life of the foundation of a wind turbine, identifying the portions of the foundation exposed to the wind based on information from the wind rose of each wind turbine on the wind farm, obtaining samples from different portions of the foundation according to the wind directions determined by the wind rose, which are subjected to fatigue testing in order to verify their strength and to therefore estimate the approximate life span thereof.

Although these methods allow estimating the remaining life of a component of the wind turbine, they do not allow making a reliable estimate because they do not take into consideration all the different variables wind conditions, or the specific operating conditions of the wind turbine at the site.

Therefore, the growing need to extend the life of wind turbines that have been in service for over 20 years makes it necessary to provide a method that allows reliably predicting the actual design life of the main components of wind turbines, taking into account specific wind and operating conditions occurring on the wind farm where the wind turbines are installed.

US 2010/138267 relates to wind turbine health management and discloses a method according to the pre-amble of appended independent claim 1.

WO 2011/143531 relates to methods and systems for predicting an end of life of a wind turbine component.

### Object of the Invention

In accordance with the present invention, there is provided a method according to appended independent claim 1. According to the present invention, a method is proposed for determining the life of components of a wind turbine or similar according to its location, such that the actual fatigue loads to which the components of the wind turbine are going to be subjected according to the wind conditions occurring at the location of the wind turbine and the operating conditions of the wind turbine at said location are taken into consideration.

The method comprises the phases of:
Phase 1: obtaining an aeroelastic model of the wind turbine according to its design conditions;
Phase 2: obtaining an aeroelastic model of the actual wind turbine arranged at its site;
Phase 3: determining the specific wind conditions at the site of the wind turbine;
Phase 4: determining the specific operating conditions of the wind turbine at its site;
Phase 5: determining the design fatigue loads on the components of the wind turbine modeled in phase 1 according to regulatory operating conditions and wind conditions;
Phase 6: determining the actual fatigue loads on the components of the wind turbine modeled in phase 2 according to the wind conditions and operating conditions determined in phases 3 and 4; and
Phase 7: determining the life of each component of the wind turbine at the site of the wind turbine, reintegrating the actual fatigue loads calculated in phase 6 until the design fatigue loads calculated in phase 5 are reached.

According to the method, in phase 3, the wind speed values at the site of the wind turbine are determined; the main wind directions striking the wind turbine are determined, and the air density at the site is determined.

A method is thereby obtained that allows efficiently estimating the time that each component of the wind turbine at the site will last without experiencing significant malfunctions, making the repair or replacement thereof necessary.

### Description of the Drawings

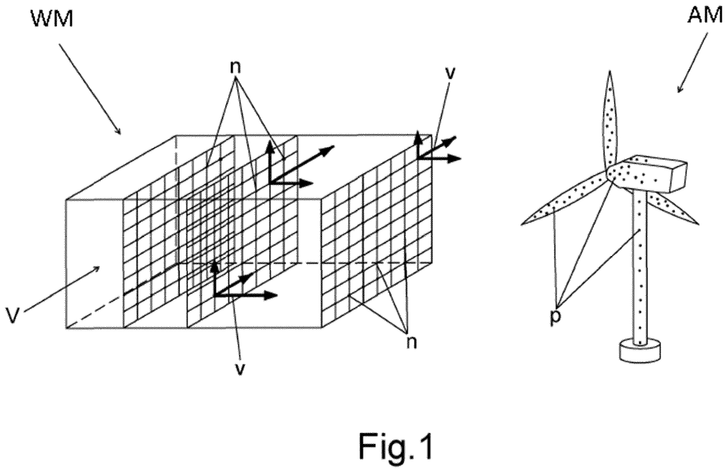

Figure 1 shows a wind model representing the three-dimensional behavior of the wind striking an aeroelastic model of a wind turbine.

### Detailed Description of the Invention

The invention proposes a method for determining the life that the different components of a wind turbine will have, taking into account the actual fatigue loads to which said components are going to be subjected during their service life at the location of the wind turbine, i.e., the wind farm in which it is installed. The life that the components of the wind turbine will have is the time, generally estimated in years, during which each component of the wind turbine works correctly according to the technical specifications for which it was designed and built, without the occurrence of significant malfunctions making the replacement or repair thereof necessary. Components of the wind turbine are understood to be any constitutional part of the wind turbine, such as, for example, the blades, rotor, hub, tower, nacelle, bearings, etc.

The method of the invention is primarily applied for wind turbines on wind farms that are already in operation and with respect to which actual data at its site is available. Therefore, the method proposed for determining the life of components of a wind turbine according to the conditions at the location of the wind turbine comprises the following operating phases:
Phase 1: obtaining an aeroelastic model of the wind turbine arranged at the site taking into account the conditions under which it was initially designed, and according to which it has been certified for operation, i.e., the wind turbine is modeled with the parameters according to which it was originally designed;
Phase 2: obtaining an aeroelastic model of the actual wind turbine which is arranged at the site, such that in the method for determining the life of components of the wind turbine are taken into account the effects of differences in weight or geometric differences between the components theoretically forming the wind turbine and the actual components of the wind turbine which is arranged at the site;
Phase 3: determining the specific wind conditions occurring at the site of the wind turbine;
Phase 4: determining the specific operating conditions of the wind turbine at the site;
Phase 5: determining the design fatigue loads on the components of the wind turbine modeled in phase 1 for a regulatory estimated life of the wind turbine of 20 years and according to regulatory operating and wind conditions, in accordance with regulations such as IEC 61400, for example;
Phase 6: determining the actual fatigue loads on the components of the wind turbine modeled in phase 2 for a regulatory estimated life of the wind turbine of 20 years and according to the wind and operating conditions determined in phases 3 and 4; and
Phase 7: determining the life of each component of the wind turbine at the site of the wind turbine, reintegrating the actual fatigue loads calculated in phase 6 until the design fatigue loads calculated in phase 5 are reached.

Wind turbines are typically designed to last 20 years under regulatory operating and wind conditions, which are usually very conservative with respect to actual wind data, such that the estimated design fatigue loads to which the components of the wind turbine are going to be subjected during the service life thereof are usually greater than the actual fatigue loads to which said components of the wind turbine are actually going to be subjected at its site for the same operating lifetime, such that by means of comparing the design fatigue loads with the actual fatigue loads, the method of the invention allows efficiently estimating how much longer each component of the wind turbine can operate without the occurrence of significant malfunctions making the replacement or repair thereof necessary.

An aeroelastic model like the one obtained in phases 1 and 2 is a virtual representation of a wind turbine based on a numerical data set summarizing the geometric, aerodynamic, mass, elastic and functional properties of each of the components of the wind turbine. The aeroelastic model is made up of:
A geometric model: numerical data set representing the geometries of the components of the wind turbine;
An aerodynamic model: numerical data set representing the type of interaction between the outer geometry of the wind turbine and the incident wind;
A mass model: numerical data set representing the mass and the center of gravity of each of the components of the wind turbine;
An elastic model: numerical data set representing the rigidity of the components of the wind turbine taking into account the direction of the wind striking them; and
A functional model: numerical data set representing the different operating conditions of each of the components of the wind turbine.

An aeroelastic model of a wind turbine is obtained by means of entering the numerical data set summarizing its properties in a specific program, such as Bladed, Flex-5, FOCUS, PHATAS, FAST, for example. By means of that specific program a number of wind turbine performance simulations according to incident wind models are performed, and results of the values of the loads to which the different components of the wind turbine are subjected are obtained by means of different mathematical methods.

The numerical data required for obtaining the aeroelastic model of the wind turbine of Phases 1 and 2, which summarizes the properties of the wind turbine, is obtained by means of physical access to the wind turbine itself installed on the wind farm, by means of information from technical specification catalogues with respect to the components of the wind turbine, by means of data in connection with material properties that can be accessed in public databases of raw material supplies, etc. The information about the outer geometry of the wind turbine is obtained by scanning the wind turbine from several positions by means of laser, or by means of other photogrammetry techniques.

The aeroelastic modeling of the wind turbine of phase 1 and phase 2 is similar, only the masses, centers of gravity, geometries and tolerances of the certified components of the ideally designed wind turbine and the components of the wind turbine actually supplied change. These differences in masses, centers of gravity, geometries and tolerances of the certified components with respect to the components actually supplied have a considerable effect when determining the life of components.

The specific wind conditions occurring at the site of the wind turbine are determined in phase 3 of the method, which conditions are used for obtaining wind models which, together with the specific operating conditions of the wind turbine which are obtained in phase 4, are used in subsequent phase 6 of the method for determining the actual fatigue loads to which the components of the wind turbine are actually subjected at the site.

Wind models are a numerical data set virtually representing the three-dimensional behavior of the wind. As seen in Figure 1, a wind model represents, in a fixed volume (V), a plurality of nodes (n), wherein each node (n) of the volume (V) is identified with a three-dimensional vector (v). A wind model incorporates the following information:
- Mean speed of the wind model: this is the mean speed of a streamline taken as being representative within the volume (V) of the wind model. The streamline passing through the center of the rotor of the wind turbine is used.
- Turbulence intensity: this is an adimensional magnitude measuring the range of variation of the wind modulus for a given streamline in a turbulent wind, where the speed varies randomly.
- Wind shear: this is the wind profile, similar to the shear profile of a boundary layer of air on a surface.
- Inflow: this is the angle of inclination of the wind.

Data of the specific wind conditions occurring at the site of the wind turbine, based on which various wind models which are used for performing several simulations and calculating the actual fatigue loads on the components of the wind turbine are obtained, is obtained from the wind farm in which the wind turbine operates.

This data of the specific wind conditions occurring at the site of the wind turbine is obtained by means of the samples taken during at least one year of a met mast located at the site, as well as from data extracted from the database of the wind farm itself. This data can also be obtained at least in part from micrositing analysis, or wind resource assessment analysis, which are already processed reports on the data obtained from the masts before the wind farm is installed.

Therefore, wind speed values occurring at the site of the wind turbine, from 0 m/s to the maximum wind speed value (Vref) that may occur at the site, are determined in said phase 3 of the method. The wind speed values are included in a Weibull distribution, in which the probability of occurrence of the wind throughout a year is distributed, such that the weight specific that each wind speed must have when calculating actual fatigue loads in phase 6 is determined by means of this probability distribution.

In addition, the main wind directions striking the wind turbine are also determined taking into account the architecture of the wind farm. Therefore, the main wind directions determined are the dominant wind directions determined by the wind rose of the wind farm in which the wind turbine is located, the wind directions in which the wind turbine is in wake position with respect to another wind turbine or other wind turbines on the wind farm, and the wind directions influenced by the wind turbine site topography. The turbulence intensity, wind shear and angle of inclination (inflow) are determined for each of those main wind directions.

In addition, given that the kinetic energy of the wind depends on air density, the air density at the site is also determined in said phase 3, the sampling year being split into two periods, a low air density period, coinciding with the summer, and a high air density period, coinciding with the winter. A probability distribution of the air density is thereby obtained which is taken into consideration for calculating the actual fatigue loads at the site, given the directly proportional effect of the air density on the life of components of the wind turbine.

Therefore, a respective wind model is obtained for each wind speed value, for each main wind direction and for each air density (high or low air density), each of which is respectively identified with wind turbulence intensity, wind shear and angle of inclination of the wind (inflow) thereof. Wind speed values are typically taken in 2 m/s intervals, i.e., 2 m/s, 4 m/s, 6 m/s,..., up to the maximum wind speed value (Vref).

In order to calculate the actual fatigue loads to which the components of the wind turbine are actually subjected, besides the specific wind conditions determined in phase 3 and based on which the wind models are obtained, the specific operating conditions of the wind turbine are also taken into consideration.

Data of the specific operating conditions of the wind turbine at the site of phase 4 is also obtained by means of the samples taken during at least one year in a met mast located at the site of the wind turbine and from data extracted from the database of the wind farm itself. These specific operating conditions are subsequently used in phase 6 of the method for determining the actual fatigue loads of the components of the wind turbine.

Therefore, the degrees of misalignment of the wind turbine, with respect to the incident wind, occurring throughout a year are determined in said phase 4 of the method, for which purpose the statistical population and the probability distribution of the degrees of misalignments of the wind turbine with respect to the incident wind are determined.

Wind turbines are oriented by rotating the nacelle such that the rotor is placed orthogonally with respect to the incident wind. Due to the variability of the wind and the tolerances of the sensor system of the wind turbine, this alignment is never perfect. When calculating design fatigue loads in regulatory operating conditions, the loads are simulated generally assuming misalignments of +/-10°, or +/-8°, with respect to the incident wind. The method proposed by the invention takes into account the actual degrees of misalignment of the wind turbine in order to calculate actual fatigue loads, given the negative effect that misalignments have on the life of components of the wind turbine.

The transitory moments that can affect the life of components of the wind turbine are also determined in said phase 4; the number of starts, normal stops and emergency stops of the wind turbine are thereby determined. Emergency stops are particularly relevant, as they are more aggressive than normal stops of the wind turbine because the wind turbine stops in a much faster manner and its components must withstand greater loads and dissipate energy in much less time, which affects the life of components of the wind turbine to a greater extent.

In addition, the annual percentage of time in which the wind turbine is stopped is also determined, which is directly proportional to the site of the wind turbine and is primarily due to the fact that the wind conditions necessary for the wind turbine to produce energy are not present either because wind speed is insufficient or else because wind speed is excessive. This information is important because the life of components of the wind turbine is affected by periods of non-operation. In general, the life increases for periods of non-operation at low wind speeds, and the life can be shortened if there are long periods with high wind speeds.

Finally, the annual percentage of time during which the wind turbine is subjected to ice accretion and/or subjected to accretion conditions on aerodynamic surfaces of the wind turbine due to materials that are suspended in the air is also determined; therefore, the excess weight to which the elements of the rotating rotor of the wind turbine are subjected, primarily the blades due to ice, is determined, and the surface roughness condition of the blades due to materials suspended in the air, such as dust, insects or other materials that are deposited on the surface of the blades of the wind turbine, changing the properties and/or geometries of the aerodynamic profile, is determined.

The specific operating conditions of the wind turbine at the site are determined for a 1-year time frame and are taken into consideration by assigning them a probability weight in the wind turbine performance simulations which are performed to calculate the actual fatigue loads in the phase 6, according to the incident wind models obtained in phase 3.

The fatigue loads to which the components of the wind turbine are subjected throughout an estimated life span of 20 years are determined in phases 5 and 6 of the method, specifically determining in phase 5 the design fatigue loads of each component of the wind turbine according to regulatory wind and operating conditions and the actual fatigue loads on each component of the wind turbine in phase 6, according to the wind and operating conditions determined in phases 3 and 4.

The calculation of fatigue loads is a set of calculations performed to simulate the wind turbine performance with respect to the incident wind, for which purpose are entered in a specific load calculation program (such as for example Bladed, Flex-5, FOCUS, PHATAS, FAST) the aeroelastic model of the wind turbine to be analyzed, wind models simulating the behavior of the wind passing over the wind turbine, and the self-control parameters of the wind turbine according to the wind regime.

Figure 1 schematically shows a simulation carried out to analyze the fatigue loads to which the wind turbine is subjected with respect to an incident wind, therefore a wind model (WM) is made to strike an aeroelastic model (AM) of the wind turbine having a number of nodes (p) on the surface thereof, such that for each instant of the simulation in which the wind model (WM) strikes the aeroelastic model (AM) of the wind turbine, a respective load vector defined by three force vectors and three momentum vectors is recorded in each node (p) of the aeroelastic model (AM) of the wind turbine.

For each simulation performed there is a time history of the magnitudes (three force vectors and three momentum vectors) of each of the load vectors of the nodes (p) of the aeroelastic model (AM) of the wind turbine. By means of rainflow counting algorithms the time history of the magnitudes of each of the load vectors is processed, and the results of the simulation are summarized in matrices commonly referred to as Markov matrices. Finally, all the Markov matrices obtained from all the simulations representing the fatigue loads to which the wind turbine is subjected throughout the year are summarized in a weighted Markov matrix, in which a probability weight is assigned to each simulation. The weighted Markov matrix summarizes the entire annual fatigue spectrum of each of the components of the wind turbine, obtaining from said weighted Markov matrix the fatigue loads on each component of the wind turbine. The methodology for calculating loads is conventional and is not described in further detail as it is not the object of the invention.

Therefore, values of the design fatigue loads to which the components of the wind turbine modeled in phase 1 according to regulatory operating and wind conditions are subjected annually are determined in phase 5 of the method. The results of these annual design fatigue loads are integrated into 20 years, according to the estimated regulatory life span of a wind turbine. This constitutes the set of fatigue requirements for which the components of the wind turbine are designed. Design fatigue loads can be obtained through the weighted Markov matrix itself or through any mathematical byproduct derived from the weighted Markov matrix.

In addition, values of the actual fatigue loads to which the components of the wind turbine modeled in phase 2 according to the wind and operating conditions determined in phases 3 and 4 are subjected annually are determined in phase 6 of the method.

Therefore, there is provided a plurality of wind models that are a function of the specific wind conditions at the site of the wind turbine determined in phase 3, wherein there is a wind model for each wind speed, for each main wind direction and for each air density value. A number of simulations are performed by means of these wind models, wherein the time history of the magnitudes (three force vectors and three momentum vectors) of each of the load vectors in the nodes (p) of the aeroelastic model (AM) of the wind turbine is obtained in each simulation, and the results of each simulation are summarized in Markov matrices.

The Markov matrices of each simulation are grouped in a weighted Markov matrix, wherein each simulation is assigned a specific probability weight in the weighted Markov matrix, so that the simulations are as close as possible to the actual wind and operation conditions occurring at the site of the wind turbine. Therefore, the specific weight that each simulation must have in the weighted Markov matrix is determined according to the Weibull distribution which includes the occurrence of the probability of wind speeds throughout the year. Likewise, the specific weight that each simulation must have is determined according to the operating conditions of the wind turbine determined in phase 4, such that the degrees of misalignment of the wind turbine with respect to the incident wind, the number of starts, stops and emergency stops of the wind turbine, the percentage of the time during which the wind turbine is stopped, and the percentage of the time during which the wind turbine is subjected to ice accretion.

Therefore, the actual fatigue loads of each component of the wind turbine throughout the year are obtained from the weighted Markov matrix. The actual fatigue loads can be obtained through the weighted Markov matrix itself or through any mathematical byproduct derived from the weighted Markov matrix. Like in phase 5, the results of these actual annual fatigue loads are integrated into 20 years according to the estimated regulatory life span of a wind turbine.

The values of the actual fatigue loads are usually lower than the values of the design fatigue loads, such that the values of the actual fatigue loads are reintegrated into 21 years, 22 years, 23 years, and so on and so forth until the values of the design fatigue loads for each component are reached. The time it actually takes each component of the wind turbine to reach the life expectancy condition for which it was designed, taking into account the wind and operating conditions at the specific location in which the wind turbine is installed, is thus determined.

Although the invention is described for determining the life of components of a wind turbine, it can also be applied for determining the life of components of a water turbine, underwater turbines or the like, for which the fluid striking the water turbine, i.e., water currents at the location in which the water turbine is arranged, has been taken into consideration.

## Claims

1. A method for determining the life of components of a wind turbine or similar according to its location, comprising the following phases:
Phase 1: obtaining an aeroelastic model of the wind turbine according to its design conditions;
Phase 2: obtaining an aeroelastic model of the actual wind turbine arranged at its site;
Phase 3: determining the specific wind conditions at the site of the wind turbine;
Phase 4: determining the specific operating conditions of the wind turbine at its site;
Phase 5: determining the design fatigue loads on the components of the wind turbine modeled in phase 1 according to regulatory operating conditions and wind conditions;
Phase 6: determining the actual fatigue loads on the components of the wind turbine modeled in phase 2 according to the wind conditions and operating conditions determined in phases 3 and 4; and
Phase 7: determining the life of each component of the wind turbine at the site of the wind turbine, reintegrating the actual fatigue loads calculated in phase 6 until the design fatigue loads calculated in phase 5 are reached;
**characterized in that** in phase 3, the wind speed values at the site of the wind turbine are determined; the main wind directions striking the wind turbine are determined, and the air density at the site is determined.

2. The method according to claim 1, wherein the main wind directions striking the wind turbine are the dominant wind directions determined by the wind rose, the wind directions in which the wind turbine is in wake position with respect to another wind turbine, and the wind directions influenced by the site topography.

3. The method according to claim 1, wherein for each wind speed value, for each main wind direction, and for each air density determined in phase 3, a respective wind model is obtained which incorporates information relating to the wind turbulence intensity, wind shear and angle of inclination of the wind.

4. The method according to claim 1, wherein in phase 4 are determined the degrees of misalignment of the wind turbine with respect to the incident wind, the number of starts, normal stops and emergency stops of the wind turbine are determined, the percentage of the time during which the wind turbine is stopped is determined, and the percentage of the time during which the wind turbine is subjected to ice accretion and/or subjected to accretion conditions on aerodynamic surfaces of the wind turbine due to materials that are suspended in the air is determined.

## Patentansprüche

1. Verfahren zur Bestimmung der Haltbarkeit von Komponenten einer Windturbine oder ähnlichen Mitteln gemäß deren Standort, wobei das Verfahren die folgenden Phasen umfasst:
Phase 1: Erhalten eines aeroelastischen Modells der Windturbine gemäß deren Gestaltungsbedingungen;
Phase 2: Erhalten eines aeroelastischen Modells der tatsächlichen Windturbine, die sich an ihrem Standort befindet;
Phase 3: Bestimmen der spezifischen Windbedingungen an dem Standort der Windturbine;
Phase 4: Bestimmen der spezifischen Betriebsbedingungen der Windturbine an ihrem Standort;
Phase 5: Bestimmen der vorgesehenen Ermüdungsbelastungen an den Komponenten der in Phase 1 modellierten Windturbine gemäß vorgeschriebenen Betriebsbedingungen und Windbedingungen;
Phase 6: Bestimmen der tatsächlichen Ermüdungsbelastungen an den Komponenten der in Phase 2 modellierten Windturbine gemäß den in den Phasen 3 und 4 bestimmten Windbedingungen und Betriebsbedingungen;
Phase 7: Bestimmen der Haltbarkeit jeder Komponente der Windturbine an dem Standort der Windturbine, wobei die in Phase 6 berechneten tatsächlichen Ermüdungsbelastungen reintegriert werden, bis die in Phase 5 berechneten vorgesehenen Ermüdungsbelastungen erreicht sind;
**dadurch gekennzeichnet, dass** in Phase 3 die Windgeschwindigkeitswerte an dem Standort der Windturbine bestimmt werden; wobei die Hauptwindrichtungen bestimmt werden, die auf die auf die Windturbine treffen, und wobei die Luftdichte an dem Standort bestimmt wird.

2. Verfahren nach Anspruch 1, wobei die Hauptwindrichtungen, die auf die Windturbine treffen, durch die Windrose bestimmten dominanten Windrichtungen sind, die Windrichtungen, bei denen sich die Windturbine in Bezug auf eine andere Windturbine an der Nachlaufposition befindet, und die Windrichtungen, die durch die Standorttopographie beeinflusst werden.

3. Verfahren nach Anspruch 1, wobei für jeden Windgeschwindigkeitswert, für jede Hauptwindrichtung und für jede in Phase 3 bestimmte Luftdichte ein entsprechendes Windmodell erhalten wird, das Informationen enthält, die sich auf die Windturbulenzintensität, den Scherwind und den Inklinationswinkel des Winds beziehen.

4. Verfahren nach Anspruch 1, wobei in Phase 4 folgendes bestimmt wird: das Ausmaß des Versatzes der Windturbine in Bezug auf den einfallenden Wind, die Anzahl der Starts, die normalen Abschaltungen und die Notabschaltungen der Windturbine, der prozentuale Anteil der Zeit, während der die Windturbine angehalten wird, und der prozentuale Anteil der Zeit, während der die Windturbine Vereisung ausgesetzt ist und/oder Ansatzbedingungen an aerodynamischen Oberflächen der Windturbine aufgrund von Materialien ausgesetzt ist, die in der Luft schweben.

## Revendications

1. Procédé pour déterminer la durée de vie des composants d'une éolienne ou similaire selon son emplacement, comprenant les étapes suivantes :
Étape 1 : obtenir un modèle aéroélastique de l'éolienne selon ses conditions de conception ;
Étape 2 : obtenir un modèle aéroélastique de l'éolienne réelle disposée sur son site ;
Phase 3 : déterminer les conditions de vent spécifiques au site de l'éolienne ;
Phase 4 : déterminer les conditions de fonctionnement spécifiques de l'éolienne sur son site ;
Phase 5 : déterminer les charges de fatigue de conception sur les composants de l'éolienne modélisés à l'étape 1 selon des conditions de fonctionnement réglementaires et des conditions de vent ;
Phase 6 : déterminer les charges de fatigue réelles sur les composants de l'éolienne modélisées à l'étape 2 selon les conditions de vent et les conditions de fonctionnement déterminées aux étapes 3 et 4 ; et
Phase 7 : déterminer la durée de vie de chaque composant de l'éolienne sur le site de l'éolienne, réintégrer les charges de fatigue réelle calculées à l'étape 6 jusqu'à ce que les charges de fatigue de conception calculées à l'étape 5 soient atteintes ;
**caractérisé en ce qu'**à l'étape 3, les valeurs de vitesse de vent sur le site de l'éolienne sont déterminées ; les directions de vent principales frappant l'éolienne étant déterminées, et la densité de l'air sur le site étant déterminé.

2. Procédé selon la revendication 1, les directions de vent principales frappant l'éolienne étant les directions de vent dominant déterminées par la rose des vents, les directions de vent dans lesquelles l'éolienne est en position de réveil par rapport à une autre éolienne, et les directions de vent influencées par la topographie du site.

3. Procédé selon la revendication 1, pour chaque valeur de vitesse de vent, pour chaque direction de vent principale, et pour chaque densité d'air déterminées à l'étape 3, un modèle de vent respectif étant obtenu qui incorpore des informations relatives à l'intensité de turbulence de vent, au cisaillement de vent et à l'angle d'inclinaison de vent.

4. Procédé selon la revendication 1, à l'étape 4 les degrés de mauvais alignement de l'éolienne par rapport au vent incident étant déterminés, le nombre de démarrages, d'arrêts normaux et d'arrêts d'urgence de l'éolienne étant déterminés, le pourcentage de temps pendant lequel l'éolienne est arrêtée étant déterminé, et le pourcentage de temps pendant lequel l'éolienne est soumise à l'accumulation de glace et/ou soumise à des conditions d'accrétion sur surfaces aérodynamiques de l'éolienne dues aux matériaux qui sont en suspension dans l'air étant déterminé.
